# EUROPÄISCHE PATENTSCHRIFT

(11) **EP 0 923 476 B1**
(45) Veröffentlichungstag und Bekanntmachung des Hinweises auf die Patenterteilung: **03.01.2001**
(21) Anmeldenummer: 97924923.2
(22) Anmeldetag: 28.05.1997
(51) Int. Cl.: B60T 8/36

(54) **MAGNETVENTIL FÜR EINE SCHLUPFGEREGELTE, HYDRAULISCHE FAHRZEUGBREMSANLAGE**
ELECTROVALVE FOR AN ANTI-SLIP AUTOMOTIVE HYDRAULIC BRAKING SYSTEM
ELECTROVANNE POUR SYSTEME DE FREINAGE HYDRAULIQUE ET A REGULATION ANTI-PATINAGE POUR VEHICULES

(30) Priorität: 03.09.1996 DE 19635691
(43) Veröffentlichungstag der Anmeldung: 23.06.1999
(73) Patentinhaber: ROBERT BOSCH GMBH, 70442 Stuttgart (DE)
(72) Erfinder: FRITSCH, Siegfried, D-87527 Sonthofen (DE); KIRSCHNER, Martin, D-87549 Rettenberg (DE)
(86) Internationale Anmeldenummer: DE9701086
(87) Internationale Veröffentlichungsnummer: WO9809856

(56) Entgegenhaltungen:
- DE-A- 3 534 665
- DE-A- 4 221 988
- DE-A- 4 412 648
- US-A- 5 423 602
- US-A- 5 460 437

## Beschreibung

### Stand der Technik

Die Erfindung geht aus von einem Magnetventil, das zum Einsetzen in eine Aufnahmebohrung eines Hydraulikblocks einer schlupfgeregelten, hydraulischen Fahrzeugbremsanlage vorgesehen ist, nach der Gattung des Patentanspruchs 1.

Ein derartiges Ventil ist bekannt aus US 5 460 437 A. Das bekannte Ventil weist einen stabförmigen Grundkörper auf, der mit seinem einen Ende in eine Aufnahmebohrung eines Hydraulikblocks einsetzbar ist, um ihn mit anderen Komponenten der Fahrzeugbremsanlage hydraulisch zu verschalten. An einem aus dem Hydraulikblock vorstehenden Ende des Grundkörpers ist ein Ventildom angebracht, in dem ein Anker axial verschiebbar aufgenommen ist. Der Grundkörper ist mit einer axialen Durchgangsbohrung versehen, in die ein vom Anker betätigter Ventilstößel hineinragt, der seinerseits einen Ventilschließkörper betätigt. Vom anderen, in der Aufnahmebohrung befindlichen Ende ist ein Ventilsitzteil in die Durchgangsbohrung des Grundkörpers eingesetzt. Zur Betätigung des bekannten Magnetventils ist eine Spule auf den Ventildom aufgesteckt.

Der Grundkörper des bekannten Magnetventils ist ein Drehteil, wird also durch spanende Bearbeitung hergestellt. Zur'Befestigung in der Aufnahmebohrung des Hydraulikblocks wird das Magnetventil mit einer an dem Ventildom und der Spule angreifenden Platte niedergehalten, welche mit dem Hydraulikblock verschraubt ist. Desweiteren ist eine Querbohrung im Bereich des Ventilschließkörpers und eines Ventilsitzes angebracht, durch die Fluid nach dem Durchtritt durch den Ventilsitz ausströmen kann. Das Querloch erfordert einen zweiten Arbeitsgang, wobei der Grundkörper auf eine Bohrmaschine aufgespannt werden muß. Die Herstellung des Grundkörpers ist dadurch aufwendig. Hinzu kommt, daß als Werkstoff für den Grundkörper ein Stahl verwendet werden muß, der sich gut spanend bearbeiten läßt und der außerdem gut schweißbar sein muß, wenn der Ventildom fluiddicht angeschweißt werden soll. Gut zerspanbar und verschweißbar sind zwei an sich einander entgegenstehende Forderungen an einen Stahl. Für den Grundkörper des bekannten Magnetventils ist daher ein Sonderstahl zu verwenden, der sowohl zerspanbar als auch schweißbar, infolgedessen jedoch verhältnismäßig teuer ist.

### Vorteile der Erfindung

Das erfindungsgemäße Magnetventil mit den Merkmalen des Patentanspruchs 1 hat demgegenüber den Vorteil, daß sich der Grundkörper einschließlich der Durchgangsbohrung in einem Arbeitsgang durch Fließpressen ohne Nachbearbeitung herstellen läßt. Hierdurch werden Kostenvorteile erzielt, da es sich hierbei um ein schnelles und kostengünstiges Herstellungsverfahren handelt. Dies hat weiterhin den Vorteil, daß ein preiswerter Umformstahl für den Grundkörper verwendet werden kann, der die Eigenschaft guter Schweißbarkeit mitsichbringt. Aufgrund der Erzeugung des Grundkörpers als Fließpreßteil bedeutet dies für die Durchgangsbohrung, daß sich der Bohrungsquerschnitt vom Stirnende des Grundkörpers ausgehend verkleinert oder konstant bleibt. Der Grundkörper des erfindungsgemäßen Magnetventils weist auch keine Verjüngung zwischen seinen Stirnenden und der Stelle größten Querschnitts und somit, aus Richtung seiner Stirnenden gesehen, keine Hinterschneidung auf. Vorteilhaft ist ferner, daß die von der Stirnseite des Grundkörpers bis in den Bereich des Ventilschließkörpers und des Ventilsitzes reichende Längsnut als Abströmkanal in der Durchgangsbohrung des Grundkörpers vorgesehen ist. Diese Nut wird beim Fließpressen hergestellt, so daß kein weiterer Arbeitsgang erforderlich ist. Weiterer Vorteil der Erfindung ist eine 180°-Umlenkung der Abströmung: axial von der in der Aufnahmebohrung befindlichen Stirnseite des Grundkörpers durch den Ventilsitz strömendes Fluid wird um 180° in die als Abströmkanal in der Wandung der Durchgangsbohrung des Grundkörpers dienende Längsnut, also um 180° umgelenkt. Diese Umlenkung der Ventildurchströmung bewirkt einen Impuls auf den Ventilstößel, der das Öffnen des Magnetventils unterstützt.

Die Unteransprüche haben vorteilhafte Ausgestaltungen und Weiterbildungen der im Patentanspruch 1 angegebenen Erfindung zum Gegenstand.

Der Grundkörper des Magnetventils mit den Merkmalen des Anspruchs 2 kann an einem Stirnende oder an seinem Mittelbereich mit einem Befestigungsflansch versehen sein. Dieser kann ringscheibenförmig ausgebildet und mit dem Grundkörper einstückig sein.

Die Anbringung eines Endstücks im in die Aufnahmebohrung des Hydraulikblocks einzusetzenden Stirnende des Grundkörpers gemäß Anspruch 3 hat den Vorteil, daß der Grundkörper selbst kürzer ausgebildet ist, wodurch er sich besser durch Fließpressen herstellen läßt. Weiterer Vorteil ist, daß die Abströmung aus der achsparallelen Längsnut in der Durchgangsbohrung auf einfache Weise und ohne daß am Grundkörper ein weiterer Arbeitsgang notwendig wäre, radial zum Umfang umgelenkt werden kann, wo sie in einen Auslaßkanal gelangt, der im Umfang der Aufnahmebohrung des Hydraulikblocks mündet.

### Zeichnung

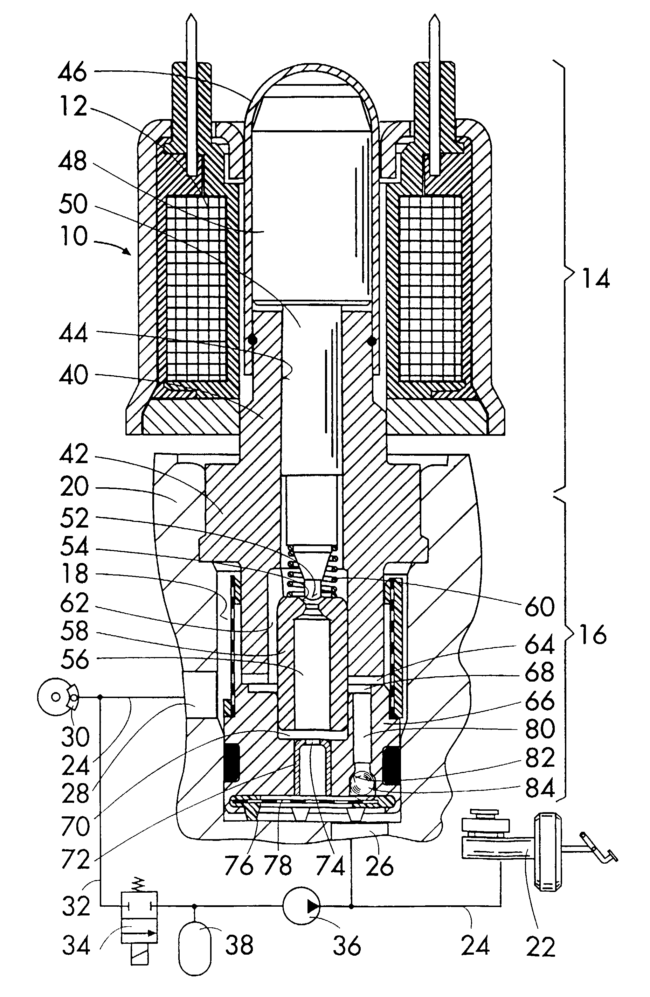

Die Erfindung wird nachfolgend anhand eines in der Zeichnung dargestellten Ausführungsbeispiels näher erläutert. Die einzige Figur zeigt einen Achsschnitt durch ein erfindungsgemäßes Magnetventil.

### Beschreibung des Ausführungsbeispiels

Das in der Zeichnung dargestellte, erfindungsgemäße Magnetventil 10 ist im wesentlichen stabförmig ausgebildet und weist zur Betätigung eine Ringspule 12 auf, die auf sein eines, einen magnetischen Teil 14 bildendes Ende aufgesetzt ist. Mit seinem anderen, einen hydraulischen Teil 16 bildenden Ende ist das Magnetventil 10 in eine Aufnahmebohrung 18 eines Hydraulikblocks 20 eingesetzt.

Mittels des Hydraulikblocks 20 ist das Magnetventil 10 mit weiteren Komponenten einer schlupfgeregelten Fahrzeugbremsanlage hydraulisch verschaltet. In der Zeichnung ist die Fahrzeugbremsanlage stark vereinfacht und mit hydraulischen Schaltsymbolen dargestellt. Eine von einem Hauptbremszylinder 22 kommende Hauptbremsleitung 24 mündet mit einer im folgenden als Einlaß 26 bezeichneten Bohrung im Hydraulikblock 20 in einer Grundfläche der Aufnahmebohrung 18 für das Magnetventil 10. Eine im folgenden als Auslaß 28 bezeichnete Bohrung mündet im Umfang der Aufnahmebohrung 18. Von ihr führt die Hauptbremsleitung 24 weiter zu einem Radbremszylinder 30. Eine als Bypass zum Magnetventil 10 geschaltete Rückleitung 32 führt vom Radbremszylinder 30 über ein Auslaßventil 34 und eine Rückförderpumpe 36 zurück zum Hauptbremszylinder 22. Zwischen Auslaßventil 34 und Rückförderpumpe 36 ist ein Speicher 38 an die Rückleitung 32 angeschlossen. Das erfindungsgemäße Magnetventil 10 bildet ein Einlaßventil für die Radbremszylinder 30. Eine Bremsdruckmodulation im Radbremszylinder 30 erfolgt in an sich bekannter Weise mit dem als Einlaßventil dienenden Magnetventil 10, dem Auslaßventil 34 und der Rückförderpumpe 36.

Das Magnetventil 10 weist einen rotationssymmetrischen, stabförmigen Grundkörper 40 auf, mit dem ein scheibenförmiger Befestigungsflansch 42 einstückig ist, der sich in etwa in der Längsmitte des Grundkörpers 40 befindet. An ihm ist das Magnetventil 10 durch Verstemmen des Werkstoffs des Hydraulikblocks 20 an einer Mündung der Aufnahmebohrung 18 in dieser fluiddicht befestigt.

Der Grundkörper 40 ist ein Fließpreßteil. Er weist stufen- oder kegelförmige Erweiterungen an seiner Außenfläche von seinen beiden Stirnenden bis zu seinem Befestigungsflansch 42 auf, an dem er seinen größten Außendurchmesser hat. Der Grundkörper 40 weist jedoch keine Verjüngungen, Hinterschneidungen oder dgl. von seinen Stirnenden in Richtung des Befestigungsflansches 42 auf, so daß er sich in einem Arbeitsgang durch Kaltfließpressen ohne Nachbearbeitung herstellen läßt.

Der Grundkörper 40 ist mit einer Axialdurchgangsbohrung 44 versehen, die ebenfalls beim Kaltfließpressen hergestellt ist. Diese weist keinerlei Erweiterungen von den Stirnenden des Grundkörpers 40 ins Innere der Durchgangsbohrung 44 auf, was anders ausgedrückt bedeutet, daß sich ein Querschnitt des Grundkörpers 40 nicht durch Erweiterungen seiner Durchgangsbohrung 44 vergrößert. Dadurch läßt sich der Grundkörper 40 einschließlich seiner Durchgangsbohrung 44 in einem Arbeitsgang durch Kaltfließpressen herstellen.

Am Stirnende des magnetischen Teils 14 ist ein Ventildom 46 auf den Grundkörper 40 aufgesetzt und fluiddicht mit diesem verschweißt. Im Ventildom 46 ist ein Anker 48 axial verschiebbar gelagert, von dem sich ein Ventilstößel 50 in die Durchgangsbohrung 44 bis in den hydraulischen Teil 16 des Magnetventils 10 erstreckt. Ein ankerfernes Ende des Ventilstößels 50 ist kugelförmig als Ventilschließkörper 52 ausgebildet. Der Ventilschließkörper 52 wirkt zusammen mit einem konischen Ventilsitz 54, der an einer dem Ventilstößel 50 zugewandten Mündung einer Axialbohrung 56 eines Ventilsitzteils 58 ausgebildet ist. Das Ventilsitzteil 58 ist ein Drehteil, das von einer ankerabgewandten Stirnseite in die Durchgangsbohrung 44 des Grundkörpers 40 eingepreßt ist.

An seiner dem Anker 48 zugewandten Stirnseite stützt sich eine Schraubendruckfeder 60 ab, die den Ventilstößel 50 vom Ventilsitzteil 58 abdrückt, so daß das Magnetventil 10 in seiner Grundstellung geöffnet ist. Wird die Spule 12 bestromt, wird der Anker 48 magnetisch an den Grundkörper 40 angezogen und über den Ventilstößel 50 der Schließkörper 52 gegen die Kraft der Schraubendruckfeder 60 an den Ventilsitz 54 angedrückt, so daß das Magnetventil 10 geschlossen ist.

Über den Umfang verteilt sind drei Längsnuten mit rundem Querschnitt als Abströmkanäle 62 in einer Wandung der Durchgangsbohrung 44 im Grundkörper 40 angebracht (in der Zeichnung ist nur ein Abströmkanal 62 sichtbar). Die Abströmkanäle 62 laufen am Außenumfang des Ventilsitzteils 58 entlang von einem Zwischenraum zwischen dem Ventilsitz 54 und dem Ventilstößel 50 bis zur ankerabgewandten Stirnseite des Grundkörpers 40. Diese Abströmkanäle 62 sind in einem Arbeitsgang beim Kaltfließpressen des Grundkörpers 40 hergestellt. Sie münden in Radialnuten 64, durch die die Abströmung zum Umfang des Magnetventils 10 erfolgt. Durch die Axialbohrung 56 im Ventilsitzteil 58 in das Magnetventil eintretendes Fluid wird also nach Durchströmen des Ventilsitzes 54 um 180° in die Abströmkanäle 62 umgelenkt, die achsparallel am Außenumfang des Ventilsitzteils 58 verlaufen.

Auf ein aus dem Grundkörper 40 vorstehendes Ende des Ventilsitzteils 58 ist ein als Drehteil hergestelltes Endstück 66 aufgepreßt. Dieses weist einen Ringraum 68 an seiner dem Grundkörper 40 zugewandten Stirnseite auf, in den die Abströmkanäle 62 münden und mit dem die zum Umfang des Magnetventils 10 führenden Radialnuten 64 kommunizieren.

Das Endstück 66 ist von einer gestuften Zuströmbohrung 70 durchsetzt, mit deren durchmessergrößerem Abschnitt das Endstück 66 auf das aus dem Grundkörper 40 vorstehende Ende des Ventilsitzteils 58 aufgepreßt ist. In den durchmesserkleineren Abschnitt ist ein napfförmiges, durch Tiefziehen aus Blech hergestelltes Drosselelement 72 eingepreßt, das eine als Drossel 74 wirkende Bohrung in seiner Bodenfläche aufweist.

Die Einstellung eines Ventilhubs erfolgt durch die Einpreßtiefe des Ventilsitzteils 58 in den Grundkörper 40. Entweder wird das Ventilsitzteil 58 zunächst in den Grundkörper 40 so tief eingepreßt, daß der gewünschte Ventilhub vorhanden ist. Anschließend wird das Endstück 66 auf das vorstehende Ende des Ventilsitzteils 58 aufgepreßt. Die Pressung des Ventilsitzteils 58 im Grundkörper 40 muß in diesem Fall größer sein als die Pressung des Endstücks 66 auf dem Ventilsitzteil 58, um die Einpreßtiefe des Ventilsitzteils 58 in den Grundkörper 40 und damit den Ventilhub nicht nachträglich zu verändern. Eine zweite Möglichkeit ist es, den Ventilsitzkörper 58 zunächst in das Endstück 66 und anschließend diese beiden Teile zusammen in den Grundkörper 40 einzupressen. Die Einstellung des Ventilhubs erfolgt anschließend durch tieferes Einpressen des Ventilssitzteils 58 in den Grundkörper 40 hinein, bis der gewünschte Ventilhub erreicht ist. Dieses Einpressen erfolgt durch die Stufenbohrung 70 des Endstücks 66 hindurch, bevor das Drosselteil 72 in das Endstück 66 eingepreßt ist.

Das Endstück 66 stützt sich über Stützfüße 76 eines mit Kunststoff umspritzten Filtersiebs 78, welches an einer dem Grundkörper 40 abgewandten Stirnseite durch Umbördeln des Endstücks 66 angebracht ist, gegen die Grundfläche der Aufnahmebohrung 18 im Hydraulikblock 20 ab. Exzentrisch und achsparallel ist eine Durchgangsbohrung 80 im Endstück 66 angebracht, die sich mit einem einen Ventilsitz 82 bildenden Konus vom Grundkörper 40 weg in Richtung zum Grund der Aufnahmebohrung 18 erweitert. Eine in der Durchgangsbohrung 80 befindliche Kugel bildet einen Ventilschließkörper 84, der vom Filtersieb 78 in der Durchgangsbohrung 80 gehalten ist. Die Durchgangsbohrung 80 im Endstück 66 bildet mit ihrem Ventilsitz 82 und der Kugel als Ventilschließkörper 84 ein von den Radialnuten 64 und dem Ringraum 68, also vom Auslaß 28 zum Einlaß 26 des Magnetventils 10 durchströmbares Rückschlagventil.

## Patentansprüche

1. Magnetventil (10) zum Einsetzen in eine Aufnahmebohrung (18) eines Hydraulikblocks (20) einer schlupfgeregelten, hydraulischen Fahrzeugbremsanlage,
- mit einem eine Durchgangsbohrung (44) aufweisenden Grundkörper (40), dessen Querschnitt sich von seinen Stirnenden zu einer Stelle größten Querschnitts ausschließlich vergrößert oder konstant bleibt und der in die Aufnahmebohrung (18) des Hydraulikblocks (20) einsetzbar ist,
- mit einem Ventildom (46), der koaxial zur Durchgangsbohrung (44) am Grundkörper (40) angebracht ist, in dem ein Anker (48) axial verschiebbar aufgenommen ist und der von einer Spule (12) umgriffen ist,
- mit einem ankerabgewandt in die Durchgangsbohrung (44) des Grundkörpers (40) eingefügten Ventilsitzteil (58) mit einem Ventilsitz (54),
- mit einem am Anker (48) angeordneten Ventilstößel (50) mit einem Ventilschließkörper (52) in der Durchgangsbohrung (44) und
- mit einer fluidleitenden Verbindung zwischen einem schließkörperseitigen Raum der Durchgangsbohrung (44) und dem Umfang des Magnetventils (10),
gekennzeichnet durch die weiteren Merkmale:
- der Grundkörper (40) ist ein in einem Arbeitsgang nacharbeitsfrei erzeugtes Fließpreßteil,
- in der Wandung der Durchgangsbohrung (44) des Grundkörpers (40) erstreckt sich mindestens eine zwischen dem schließkörperseitigen Raum der Durchgangsbohrung (44) entlang dem Ventilsitzteil (58) zum ankerabgewandten Stirnende des Grundkörpers (40) verlaufende Längsnut (62),
- am ankerabgewandten Stirnende des Grundkörpers (40) verläuft mindestens eine zum Umfang des Magnetventils (10) führende Radialnut (64),
- die Längsnut (62) und die Radialnut (64) bilden die fluidleitende Verbindung.

2. Magnetventil nach Anspruch 1, dadurch gekennzeichnet, daß der Grundkörper (40) an der Stelle größten Querschnitts einen Befestigungsflansch (42) aufweist, mit dem das Magnetventil (10) an einer Mündung der Aufnahmebohrung (18) des Hydraulikblocks (20) befestigbar ist.

3. Magnetventil nach Anspruch 1, dadurch gekennzeichnet, daß das Ventilsitzteil (58) über das ankerabgewandte Stirnende des Grundkörpers (40) hervorsteht und auf seinem hervorstehenden Ende mit einem aufgeschobenen Endstück (66) versehen ist, welches grundkörperseitig einen Ringraum (68) aufweist, in den die Längsnut (62) mündet und mit dem die Radialnut (64) des Grundkörpers (40) kommuniziert.

4. Magnetventil nach Anspruch 3, dadurch gekennzeichnet, daß das Endstück (66) eine axial verlaufende Zuströmbohrung (70) hat, die durch eine Axialbohrung (56) des Ventilsitzteils (58) mit dem Ventilsitz (54) in fluidleitender Verbindung steht, und daß das Endstück (66) zur Aufnahme einer umfangsseitigen Dichtung, eines stirnseitigen Filtersiebs (78), eines Drosselteils (72) in der Zuströmbohrung (70) und eines Rückschlagventils (82, 84) in einer achsparallel zur Zuströmbohrung (70) von der grundkörperabgewandten Stirnseite zum Ringraum (68) verlaufenden Durchgangsbohrung (80) ausgebildet ist.

## Claims

1. Solenoid valve (10) for insertion into a receiving bore (18) of a hydraulic block (20) of an anti-slip hydraulic vehicle brake system,
- with a basic body (40) which has a passage bore (44) and the cross section of which exclusively increases from its end faces to a point of maximum cross section or remains constant and which is insertable into the receiving bore (18) of the hydraulic block (20),
- with a valve dome (46) which is mounted on the basic body (40) coaxially to the passage bore (44) and in which an armature (48) is received axially displaceably and which is surrounded by a coil (12),
- with a valve seat part (58) which is inserted into the passage bore (44) of the basic body (40) at the end facing away from the armature and which has a valve seat (54),
- with a valve tappet (50) arranged on the armature (48) and having a valve-closing body (52) in the passage bore (44), and
- with a fluid-conducting connection between a space of the passage bore (44) located on the closing-body side and the circumference of the solenoid valve (10), characterized by the further features:
- the basic body (40) is an extrusion produced without reworking in one operation,
- in the wall of the passage bore (44) of the basic body (40) extends at least one longitudinal groove (62) which runs between the space of the passage bore (44) located on the closing-body side, along the valve seat part (58), to that end face of the basic body (40) which faces away from the armature,
- at least one radial groove (64) leading to the circumference of the solenoid valve (10) runs on that end face of the basic body (40) which faces away from the armature,
- the longitudinal groove (62) and the radial groove (64) form the fluid-conducting connection.

2. Solenoid valve according to Claim 1, characterized in that the basic body (40) has, at the point of maximum cross section, a fastening flange (42), by means of which the solenoid valve (10) can be fastened to a mouth of the receiving bore (18) of the hydraulic block (20).

3. Solenoid valve according to Claim 1, characterized in that the valve seat part (58) projects beyond that end face of the basic body (40) which faces away from the armature, the said valve seat part being provided on its projecting end with a pushed-on endpiece (66) which, on the basic-body side, has an annular space (68), into which the longitudinal groove (62) issues and with which the radial groove (64) of the basic body (40) communicates.

4. Solenoid valve according to Claim 3, characterized in that the endpiece (66) has an axially running inflow bore (70) which is in fluid-conducting connection with the valve seat (54) by means of an axial bore (56) of the valve seat part (58), and in that, in order to receive a circumferential seal, a filter screen (78) located on the end face, a throttle part (72) in the inflow bore (70) and a non-return valve (82, 84), the endpiece (66) is formed in a passage bore (80) running axially parallel to the inflow bore (70) from the end face facing away from the basic body to the annular space (68).

## Revendications

1. Electrovanne (10) à insérer dans un alésage de réception (18) d'un bloc hydraulique (20) d'une installation hydraulique de frein de véhicule à régulation anti-patinage, comprenant :
• un corps de base (40) présentant un alésage de passage (44), dont la section transversale s'agrandit depuis ses extrémités frontales jusqu'à un endroit où la section transversale est la plus grande ou demeure constante et qui peut être insérée dans l'alésage de réception (18) du bloc hydraulique,
• un dôme de vanne (46), qui est placé coaxialement à l'alésage de passage (44) sur le corps de base (40), dôme dans lequel est logée une armature (48) qui peut coulisser axialement et qui est entourée par une bobine (12),
• une pièce (58) formant le siège de la vanne qui est enfilée à l'opposé de l'armature dans l'alésage de passage (44) du corps de base (40) avec un siège de vanne (54),
• un poussoir de vanne (50), disposé sur l'armature (48) avec un corps d'obturation de vanne (52) dans l'alésage de passage (44) et
• une liaison faisant passer du fluide entre un espace situé du côté du corps d'obturation de l'alésage de passage (44) et,
• le pourtour de l'électrovanne (10),
caractérisée en ce que
• le corps de base (40) est une pièce extrudée sous presse en une opération de travail sans finition,
• dans la paroi de l'alésage de passage (44) du corps de base (40) s'étend au moins une rainure longitudinale (62) dans l'espace de l'alésage de passage (44) situé du côté du corps d'obturation le long de la pièce (58)qui forme le siège de la vanne en direction de l'extrémité frontale du corps de base (40) située à l'opposé de l'armature,
• sur l'extrémité frontale du corps de base (40) située à l'opposé de l'armature s'étend au moins une rainure radiale (64) qui va vers le pourtour de l'électrovanne (10),
• la rainure longitudinale (62) et la rainure radiale (64) forment la liaison de passage du fluide.

2. Electrovanne selon la revendication 1,
caractérisée en ce que
le corps de base (40) présente à l'endroit où la section transversale est la plus grande une bride de fixation (42), avec laquelle l'électrovanne (10) peut être fixée sur une embouchure de l'alésage de réception (18) du bloc hydraulique (20).

3. Electrovanne selon la revendication 1,
caractérisée en ce que
la pièce (58), qui forme le siège de la vanne, fait saillie sur l'extrémité frontale du corps de base (40), située à l'opposé de l'armature, et est pourvue à son extrémité saillante d'une pièce terminale (66) enfilée, qui présente du côté du corps de base un espace annulaire (68), dans lequel débouche la rainure longitudinale (62) et avec lequel communique la rainure radiale (64) du corps de base (40).

4. Electrovanne selon la revendication 3,
caractérisée en ce que
• la pièce terminale (66) a un alésage d'écoulement (70) qui s'étend axialement, qui est en liaison fluidique par un alésage axial (56) de la pièce (58), qui forme le siège de la vanne, et
• la pièce terminale (66) est constituée pour recevoir un joint d'étanchéité situé du côté périphérique, une passoire de filtre (78) située du côté frontal, une pièce d'étranglement (72) dans l'alésage d'écoulement (70) et un clapet anti-retour (82, 84) dans un alésage de passage (80) qui s'étend parallèlement à l'axe de l'alésage d'écoulement (70) depuis le côté frontal situé à l'opposé du corps de base vers l'espace annulaire (68).
